# EUROPEAN PATENT APPLICATION

(11) **EP 1 653 590 A1**
(43) Date of publication of application: **03.05.2006**
(21) Application number: 04256689.3
(22) Date of filing: 29.10.2004
(51) Int. Cl.: H02K 7/18

(54) **Induction generator for a rotatable object**

(71) Applicant: Tsou, Shih-En, Tao Yuan City (TW)
(72) Inventor: Tsou, Shih-En, Tao Yuan City (TW)
(74) Representative: Lamb, Martin John Carstairs

(57) **Abstract**

An induction generator (1) includes a mounting member (2), a supporting member (3), a sensing coil unit (4), and a magnet unit (5). The supporting member (3) is mounted on the mounting member (2) such that relative rotation between the mounting and supporting members (2, 3) is permitted about a pivot axis (21). The sensing coil unit (4) is mounted on one of the mounting and supporting members (2, 3), and has a field-sensing plane (41). The magnet unit (5) is mounted on the other of the mounting and supporting members (2, 3), and has a field-emanating plane (51). An assembly of the supporting member (3) and one of the sensing coil unit (4) and the magnet unit (5) that is mounted on the supporting member (3) has a weight center that is offset from the pivot axis (21) . Relative rotation between the mounting and supporting members (2, 3) about the pivot axis (21) induces electrical current in the sensing coil unit (4).

## Description

The invention relates to an induction generator, more particularly to an induction generator adapted for use with a rotatable object.

Objects, such as bicycle wheels, shoes, yo-yos, etc. , are often mounted with passive light-reflecting devices or active light-generating devices for warning or aesthetic purposes.

Passive light-reflecting devices, usually in the form of light-reflecting stickers adhered on the surface of an object, rely on the presence of light rays for reflection. Therefore, when there is no incident light, the passive light-reflecting devices will not function. Moreover, passive light-reflecting devices can only reflect incident light to a specific reflective direction, and thus cannot provide reflected light of relatively high luminance and dispersed at wide angles.

Therefore, if cost is not a factor to be considered, active light-generating devices are a more ideal choice. Active light-generating devices are usually powered electrically, either through batteries or generators. However, batteries can harm the environment, and have limited power storage capacities. Moreover, if high luminance and long duration of use are desired, relatively large and heavy batteries are adopted, which can result in other problems during use. For example, a bicycle mounted with a car battery would result in extra effort for the rider.

As such, light-generating devices on a bicycle are usually powered using a generator. A conventional generator for bicycle use typically includes a main generator body mounted on the bicycle frame, and a generator axle in contact with a bicycle wheel, which impose restrictions on installation positions and on the design of the bicycle. Moreover, the light-generating devices powered by the known generator can hardly be installed on moving objects, such as bicycle wheels, yo-yos, etc., in view of electrical connection considerations.

Therefore, the object of the present invention is to provide an induction generator that is suitable for use with a rotatable object so as to overcome the aforesaid drawbacks associated with the prior art.

Accordingly, an induction generator of this invention comprises a mounting member, a supporting member, a sensing coil unit, and a magnet unit. The supporting member is mounted on the mounting member such that relative rotation between the mounting and supporting members is permitted about a pivot axis. The sensing coil unit is mounted on one of the mounting and supporting members, and has a field-sensing plane. The magnet unit is mounted on the other of the mounting and supporting members, and has a field-emanating plane. An assembly of the supporting member and one of the sensing coil unit and the magnet unit that is mounted on the supporting member has a weight center that is offset from the pivot axis. Relative rotation between the mounting and supporting members about the pivot axis results in bringing of the field-sensing and field-emanating planes toward and away from each other, thereby inducing electrical current in the sensing coil unit.

Other features and advantages of the present invention will become apparent in the following detailed description of the preferred embodiments with reference to the accompanying drawings, of which:
Figure 1 is a schematic side view of a bicycle that incorporates the first preferred embodiment of an induction generator according to the present invention;
Figure 2 is a front view of a wheel of the bicycle of Figure 1;
Figure 3 is an assembled perspective view of the first preferred embodiment;
Figure 4 is a schematic view of the first preferred embodiment, illustrating a state where field-sensing and field-emanating planes of a sensing coil unit and a magnet unit are brought toward each other;
Figure 5 is a schematic view of the first preferred embodiment, illustrating a state where the field-sensing and field-emanatingplanes of the sensing coil unit and the magnet unit are brought away from each other;
Figure 6 is an assembledperspective view of the second preferred embodiment of an induction generator according to the present invention;
Figure 7 is a partly exploded, perspective view of the third preferred embodiment of an induction generator according to the present invention;
Figure 8 is a schematic view of the fourth preferred embodiment of an induction generator according to the present invention; and
Figure 9 is a schematic sectional view of the fourth preferred embodiment, taken along line 9-9 in Figure 8.

Before the present invention is described in greater detail with reference to the accompanying preferred embodiments, it should be noted herein that like elements are denoted by the same reference numerals throughout the disclosure.

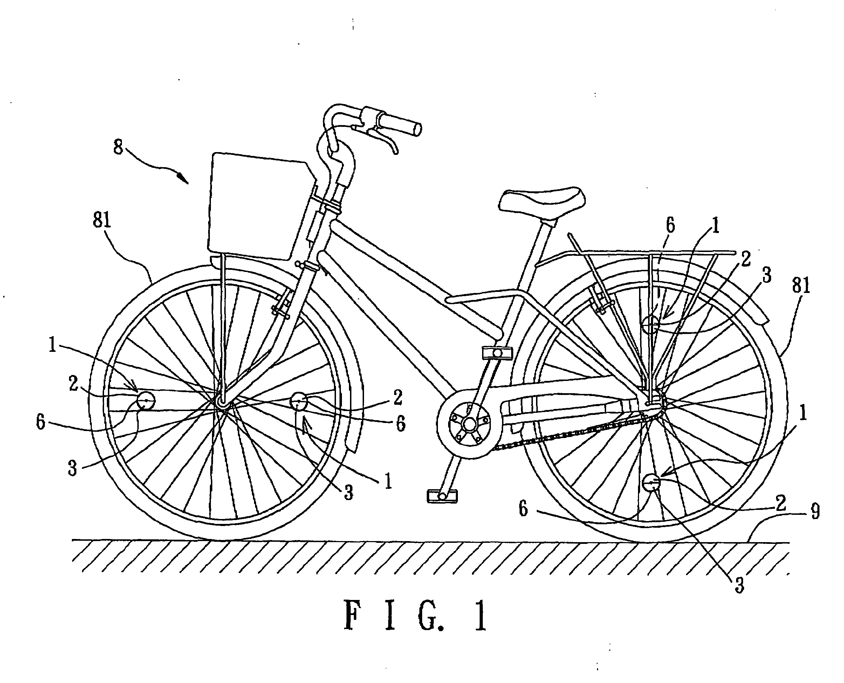

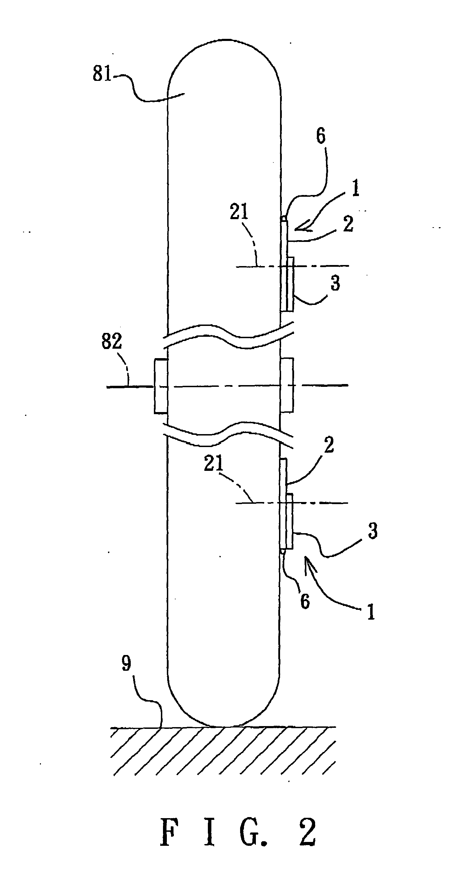

Referring to Figures 1 and 2, the first preferred embodiment of an induction generator 1 according to the present invention is shown to be mounted on a wheel 81 of a bicycle 8. The wheels 81 rotate about a respective rotary axis 82 when the bicycle 8 moves on the ground 9 . In the example of Figures 1 and 2, each wheel 81 has a pair of the induction generators 1 mounted thereon.

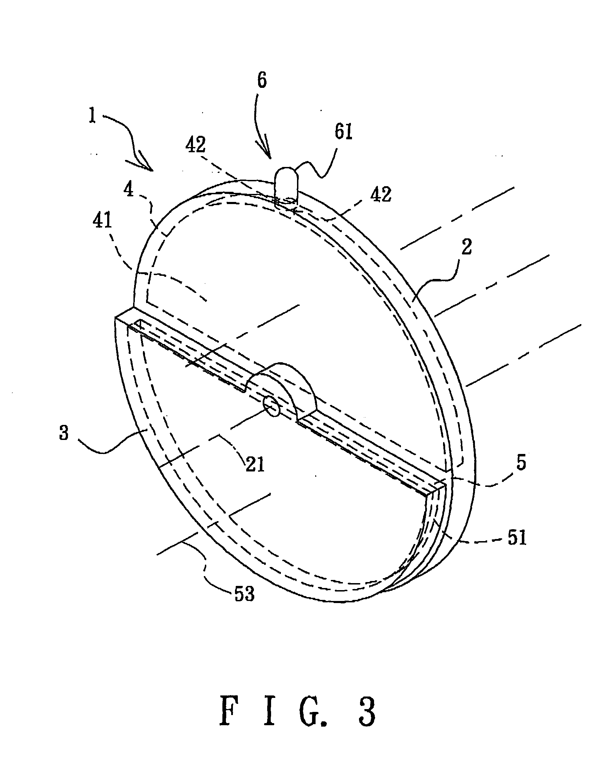

Referring to Figures 2 and 3, the induction generator 1 comprises a mounting member 2, a supporting member 3, a sensing coil unit 4, a magnet unit 5, and an electrical load 6.

The mounting member 2 is secured on the wheel 81, such as with the use of fasteners (not shown), at a position offset from the rotary axis 82. The supporting member 3 is mounted on the mounting member 2 using any suitable means such that relative rotation between the mounting and supporting members 2, 3 is permitted about a pivot axis 21. The sensing coil unit 4 includes a sensing coil that is mounted in the mounting member 2 and that has a field-sensing plane 41 and a pair of coil terminals 42. The magnet unit 5 includes a permanent magnet that is mounted on the supporting member 3 and that has a field-emanating plane 51. In this embodiment, the field-sensing plane 41 and the field-emanating plane 51 are transverse to the pivot axis 21.

In this embodiment, the mounting member 2 is made of plastic, and is a hollow circular disc that defines the pivot axis 21 parallel to the rotary axis 82. In practice, the material and shape of the mounting member 2 should not be limited to those of the preferred embodiment. The mounting member 2 is larger than the supporting member 3, and has first and second semi-circular portions, one of which has the sensing coil unit 4 mounted therein. The supporting member 3 is made of a ferromagnetic material, and has a semi-circular shape. In practice, the material and shape of the supporting member 3 should not be limited to those of the preferred embodiment. The supporting member 3 has a recessed side that confronts the mounting member 2 and that has the magnet unit 5 mounted thereon. By adopting a ferromagnetic material for the supporting member 3, an enhanced magnetic induction effect can be achieved. In addition, the magnet unit 5 has north and south magnetic poles that are opposite to each other along a line 53 parallel to the pivot axis 21.

In the first preferred embodiment of this invention, the assembly of the supporting member 3 and the magnet unit 5 has a weight center that is offset from the pivot axis 21. Hence, it is evident that the exact shape of the supporting member 3 is not critical to the present invention, as long as the aforesaid weight center is maintained offset from the pivot axis 21.

In this embodiment, the electrical load 6 includes a lamp 61, such as light-emitting diode (LED) or an incandescent lamp, mounted on the mounting member 2 and coupled electrically to the coil terminals 42 of the sensing coil unit 4.

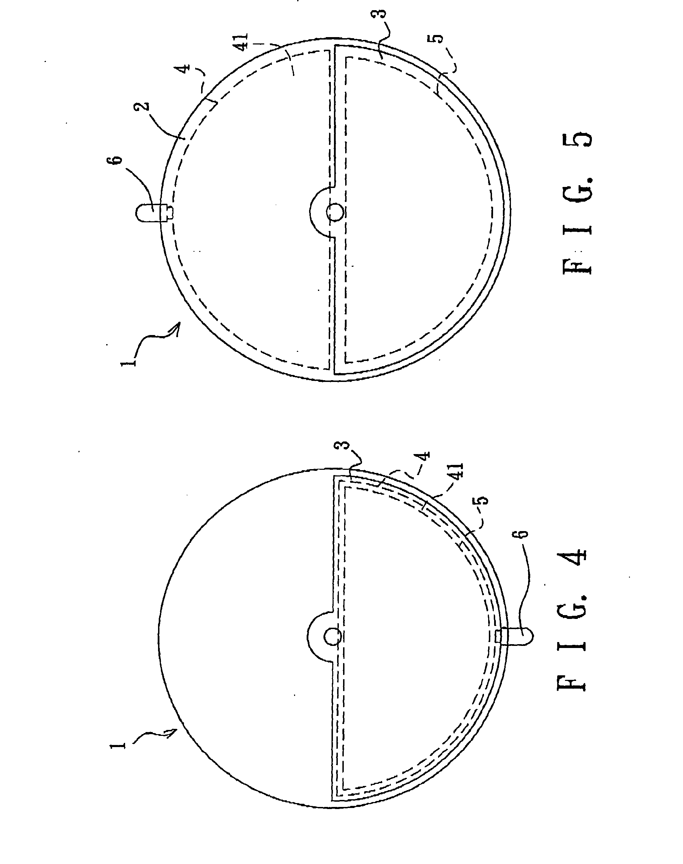

In view of the aforesaid construction, relative rotation between the mounting and supporting members 2, 3 about the pivot axis 21 results in bringing of the field-sensing and field-emanating planes 41, 51 to move toward and away from each other, as best shown in Figures 4 and 5, thereby inducing electrical current in the sensing coil unit 4 as a result of magnetic flux changes therein.

Referring once again to Figures 1 and 2, when the wheel 81 rotates about the respective rotary axis 82, the mounting member 2 also rotates about the rotary axis 82 to result in relative rotation between the mounting member 2 and the supporting member 3. As a consequence, the field-sensing and field-emanating planes 41, 51 are brought to move toward and away from each other in an alternating manner, thereby inducing electrical current in the sensing coil unit 4 that is supplied to the electrical load 6 for driving the latter to generate a flashing output.

Therefore, when the induction generator of this invention is applied to the wheels 81 of the bicycle 8, bright warning light can be generated regardless of ambient light conditions and can be radiated in numerous directions, which is an improvement as compared to conventional reflective stickers.

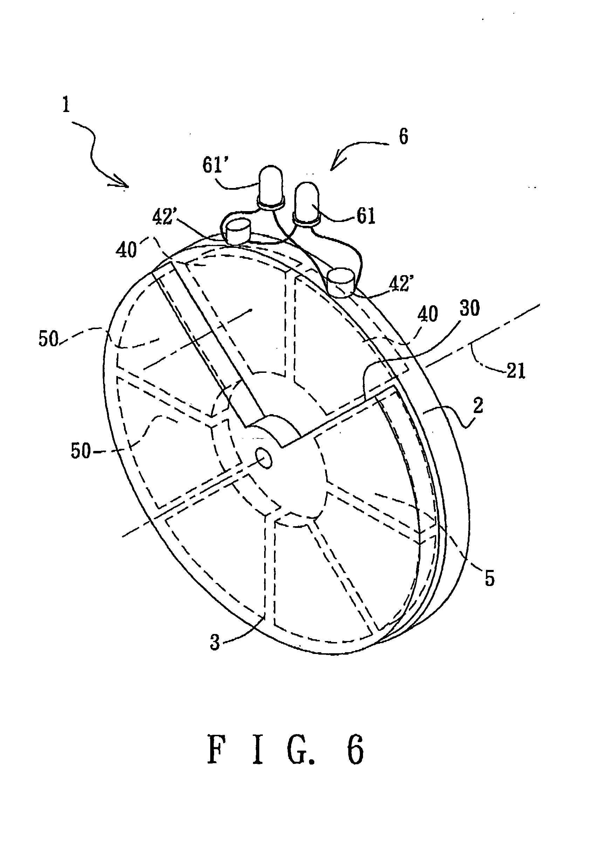

Figure 6 illustrates the second preferred embodiment of an induction generator 1 according to this invention, which is a modif ication of the first preferred embodiment. In this embodiment, the sensing coil unit includes eight sensing coils 40 mounted on the mounting member 2, radially spaced apart from the pivot axis 21, angularly spaced apart from each other, and connected electrically in series. The magnet unit includes six permanent magnets 50 mounted on the supporting member 3, radially spaced apart from the pivot axis 21, and angularly spaced apart from each other. The supporting member 3 is a metal disc formed with a notch 30, i.e., the supporting member 3 is sector-shaped. The electrical load 6 includes a pair of lamps 61, 61' connected electrically to output terminals 42' of the sensing coil unit.

In this embodiment, the notch 30 in the supporting member 3 has a width corresponding to that of two adj acent sensing coils 40 on the mounting member 2, and ensures that the weight center of the assembly of the supporting member 3 and the magnet unit is offset from the pivot axis 21. Electrical current for driving operation of the lamps 61, 61' of the electrical load 6 is induced in the sensing coil unit in a manner similar to that described hereinabove in connection with the first preferred embodiment. In practice, the number of flashes generated by the lamps 61, 61' depends on the actual numbers of the sensing coils 40 and the permanent magnets 50.

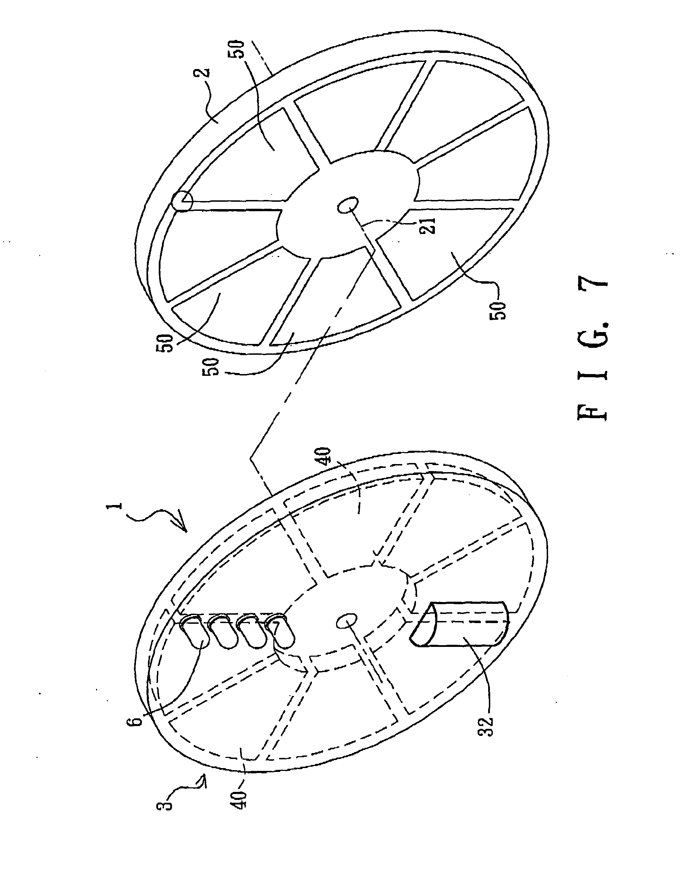

Figure 7 illustrates the third preferred embodiment of an induction generator 1 according to this invention, which is a modification of the second preferred embodiment. In this embodiment, the sensing coil unit includes eight sensing coils 40 mounted on the supporting member 3, radially spaced apart from the pivot axis 21, angularly spaced apart from each other, and connected electrically in series. The magnet unit includes eight permanent magnets 50 mounted on the mounting member 2, radially spaced apart from the pivot axis 21, and angularly spaced apart from each other. Unlike the previous embodiments, the mounting member 2 is a ferromagnetic circular disc, whereas the supporting member 3 is a hollow plastic circular disc. A weight-increasing block 32 is formed on the supporting member 3 to help ensure that the weight center of the assembly of the supporting member 3 and the sensing coil unit is offset from the pivot axis 21. The lamps of the electrical load 6 are mounted on the supporting member 3.

It is evident from the second and third preferred embodiments that the actual numbers of the sensing coils 40 and the permanent magnets 50 can vary depending on design requirements. Moreover, the dispositions of the sensing coil unit and the magnet unit on the mounting member 2 and the supporting member 3 may be interchanged without affecting operation of the induction generator 1.

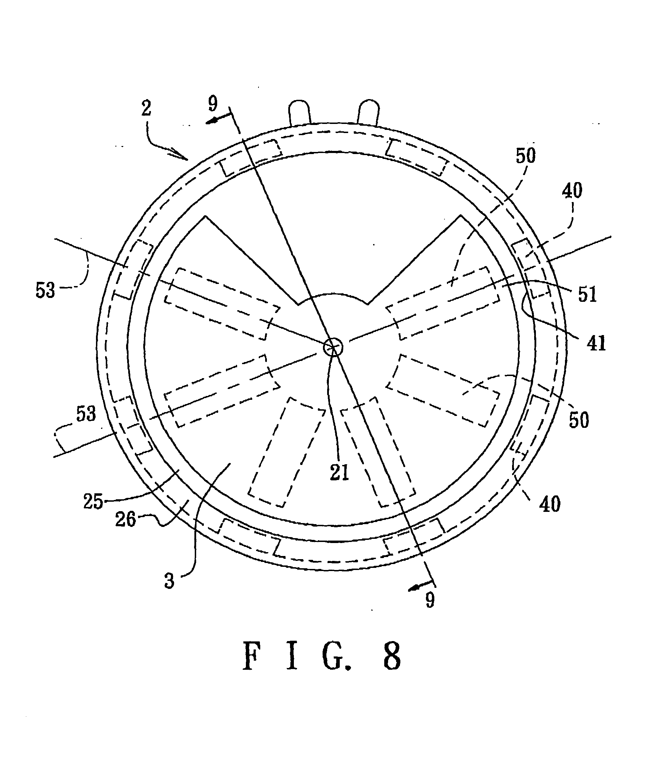

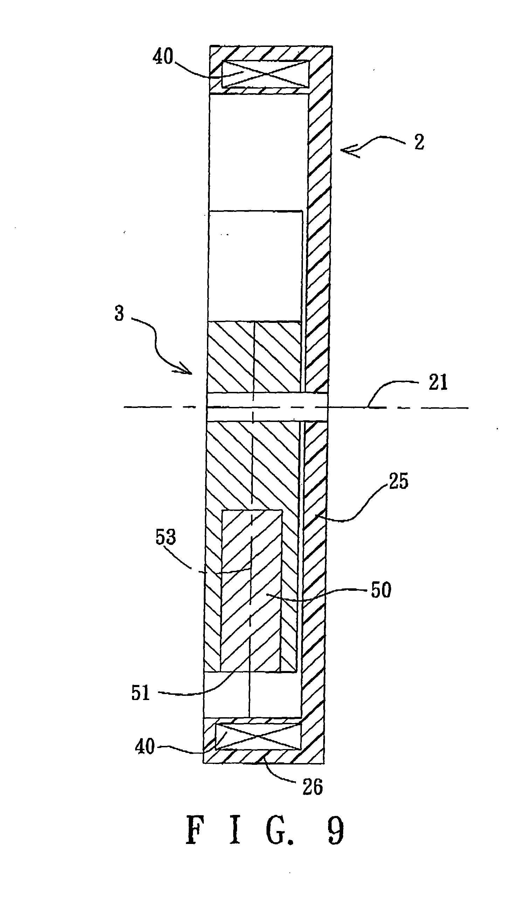

Figures 8 and 9 illustrate the fourth preferred embodiment of an induction generator 1 according to this invention, which is a modification of the second preferred embodiment. Unlike the previous embodiments, the field-sensing planes 41 of the sensing coils 40 and the field-emanating planes 51 of the permanent magnets 50 are parallel to the pivot axis 21.

In this embodiment, the mounting member 2 is made of plastic, and includes a circular base portion 25, and an annular coil mounting portion 26 projecting from a periphery of the circular base portion 25. The sensing coils 40 of the sensing coil unit are mounted on the coil mounting portion 26, are radially spaced apart from the pivot axis 21, are angularly spaced apart from each other, and are connected electrically in series. The supporting member 3 is a notched metal disc, which is similar to the embodiment of Figure 6, and is surrounded by the coil mounting portion 26 of the mounting member 2. The permanent magnets 50 of the magnet unit are mounted on the supporting member 3, are disposed between the pivot axis 21 and the coil mounting portion 26, and are angularly spaced apart from each other. In this embodiment, each permanent magnet 50 has north and south magnetic poles that are opposite to each other along a line 53 that is radial to the pivot axis 21.

Like the previous embodiments, relative rotation between the mounting member 2 and the supporting member 3 results in induced current in the sensing coils 40.

The induction generator 1 of this invention should not be limited for application to bicycle wheels. Because of its simple configuration, the induction generator 1 can be fabricated to have a size suitable for application to other rotatable objects, such as yo-yos, pendulums, etc.

## Claims

1. An induction generator (1) comprising:
a mounting member (2);
a supporting member (3) mounted on said mounting member (2) such that relative rotation between said mounting and supporting members (2, 3) i s permitted about a pivot axis (21);
a sensing coil unit (4) mounted on one of said mounting and supporting members (2, 3) and having a field-sensing plane (41); and
a magnet unit (5) mounted on the other of said mounting and supporting members (2, 3) and having a field-emanating plane (51);
wherein an assembly of said supporting member (3) and one of said sensing coil unit (4) and said magnet unit (5) that is mounted on said supporting member (3) has a weight center that is offset from the pivot axis (21) ;
wherein relative rotation between said mounting and supporting members (2, 3) about the pivot axis (21) results in bringing of said field-sensing and field-emanating planes (41, 51) toward and away from each other, thereby inducing electrical current in said sensing coil unit (4).

2. The induction generator (1) as claimed in Claim 1, further comprising an electrical load (6) mounted on one of said mounting and supporting members (2, 3) having said sensing coil unit (4) mounted thereon, and coupled electrically to said sensing coil unit (4).

3. The induction generator (1) as claimed in Claim 2, **characterized in that** said electrical load (6) is a lamp (61).

4. The induction generator (1) as claimed in Claim 1, **characterized in that** said mounting member (2) is larger than said supporting member (3) and has first and second portions, one of which has one of said sensing coil unit (4) and said magnet unit (5) mounted thereon.

5. The induction generator (1) as claimed in Claim 4, further **characterized in that** said supporting member (3) has a semi-circular shape.

6. The induction generator (1) as claimed in Claim 1, **characterized in that** said sensing coil unit (4) includes a plurality of sensing coils (40) radially spaced apart from the pivot axis (21) and angularly spaced apart from each other.

7. The induction generator (1) as claimed in Claim 6, further **characterized in that** said sensing coils (40) are connected in series.

8. The induction generator (1) as claimed in Claim 1, **characterized in that** said magnet unit (5) includes a plurality of magnets (50) radially spaced apart from the pivot axis (21) and angularly spaced apart from each other.

9. The induction generator (1) as claimed in Claim 1, **characterized in that** said field-sensing plane (41) and said field-emanating plane (51) are transverse to the pivot axis (21).

10. The induction generator (1) as claimed in Claim 1, **characterized in that** said field-sensing plane (41) and said field-emanating plane (51) are parallel to the pivot axis (21).

11. The induction generator (1) as claimed in Claim 1, **characterized in that** said supporting member (3) is formed with a weight-increasing block (32) to help ensure that the weight center is offset from the pivot axis (21).

12. An induction generator (1) for an object (81) that is rotatable about a rotary axis (82), comprising:
a mounting member (2) adapted to be mounted on the object (81) at a position offset from the rotary axis (82);
a supporting member (3) mounted on said mounting member (2) such that relative rotation between said mounting and supporting members (2, 3) is permitted about a pivot axis (21) that is parallel to the rotary axis (82);
a sensing coil unit (4) mounted on one of said mounting and supporting members (2, 3) and having a field-sensing plane (41); and
a magnet unit (5) mounted on the other of said mounting and supporting members (2, 3) and having a field-emanating plane (51);
wherein an assembly of said supporting member (3) and one of said sensing coil unit (4) and said magnet unit (5) that is mounted on said supporting member (3) has a weight center that is offset from the pivot axis (21) ;
wherein rotation of said mounting member (2) relative to said supporting member (3) about the pivot axis (21) due to rotation of the object (81) about the rotary axis (82) results in bringing of said field-sensing and field-emanating planes (41, 51) toward and away from each other, thereby inducing electrical current in said sensing coil unit (4).
